# EUROPEAN PATENT SPECIFICATION

(11) **EP 2 027 675 B1**
(45) Date of publication and mention of the grant of the patent: **22.01.2020**
(21) Application number: 06748031.9
(22) Date of filing: 09.06.2006
(51) Int. Cl.: H04L 29/12, H04L 12/28, H04L 12/24, H04L 12/46

(54) **OPERATOR MANAGED VIRTUAL HOME NETWORK**
VOM BEDIENER VERWALTETES VIRTUELLES HAUS-NETZ
RÉSEAU DOMESTIQUE VIRTUEL GÉRÉ PAR OPÉRATEUR

(43) Date of publication of application: 25.02.2009
(73) Proprietor: Telefonaktiebolaget LM Ericsson (publ), 164 83 Stockholm (SE)
(72) Inventor: BASILIER, Henrik, S-187 34 Täby (SE)
(74) Representative: Zacco Sweden AB
(86) International application number: PCT/SE2006/050191
(87) International publication number: WO 2007/142567

(56) References cited:
- WO-A2-2005/091556
- US-A1- 2004 047 320
- US-A1- 2005 076 142
- US-A1- 2005 190 775
- US-B1- 7 055 171

## Description

### TECHNICAL FIELD

The present invention relates in general to an operator managed home area network service.

### BACKGROUND OF THE INVENTION

The area of home area networking, home LAN (Local Area Network), is rapidly evolving. A multitude of devices, e.g. personal computers, laptops, gaming devices, Personal Digital Assistants (PDAs), music and media players, media recorders, television sets, set top boxes etc, becomes connected, both wired and wireless, through a home area network or home LAN. The technology used is often a combination of wired Ethernet and 802.1 1x for wireless access. However, the Internet Protocol (IP) is the unifying layer for communication.

Typically, the home LAN is a private IP network wherein the IP addresses of the devices are provided by a home router or a residential gateway (GW). As the connection to a wide area network (WAN) is typically shared among the user devices in the home LAN and a single public IP address is used for the communication outside the home LAN a NAT/FW (Network Address Translator/Firewall) located in the home LAN is often used when interconnecting with the WAN. In other words, no direct connection to the home LAN is available without going through the NAT/FW.

As the number of devices in the home LAN is increasing and the functionality of the devices is largely overlapping (e.g. several devices are capable of storing and playing media content) the need of solving the interoperability issues has increased. For example, the SMB (Server Message Block) protocol, the UPnP (Universal Plug and Play) and the DLNA (Digital Living Network Alliance) provide standards guaranteeing smooth interworking of devices, with a minimum of configuration needed from the end users. The standards include device and capability discovery, media or content transfer and media browsing capabilities.

Mobile devices are part of the framework as well, accessing or delivering content while connected to the home LAN (e.g. through IEEE 802.11). Therefore, it is desirable to provide a system that allows a user of a mobile device to easily participate in the community of home networking devices, also when on the move, i.e. when outside the home LAN. Furthermore, the system should provide the ability of network operators to participate, e.g. by providing services such as capabilities for the user to store and access content in a server of the operator.

US 2005/0190775 A1, describes a multiservice access system for relating communication service providers and application service providers to users. The multiservice access system is created with Ethernet technology for practically unrestricted number of users.

US 2004/0047320 A1, describes a wireless virtual area network (VLAN) and a device selectively connecting to the wireless VLAN either directly or indirectly over another wireless network that may be independent of the wireless VLAN.

### SUMMARY

The invention is defined by the independent claims. Furthermore, the embodiments of the invention are those defined by the claims. Moreover, examples, embodiments and descriptions, which are not covered by the claims are presented not as embodiments of the invention, but as background art or examples useful for understanding the invention.

A solution would be to connect a gateway device to the home LAN.

The gateway communicates with servers and mobile devices outside the home LAN, making it appear that they are present on the home LAN and making external content available to the home LAN.

However, there are some drawbacks with the mentioned solution. Gateway devices tend to be application specific and thus inflexible. Accordingly, gateway devices could in the future be subject of standardisation in order to avoid interoperability unless solved otherwise. The gateway device and NAT/FW device have to be set up and managed, something that may be too difficult for the average user. If the gateway device is provided and managed by the operator, the operator has to manage one or more devices present in the premises of the customer in order to guarantee service delivery. There are a number of disadvantages with residential gateway devices and NAT/FW devices. The operator has to be able to track down and solve any problems related to the service which may be costly for the operator. Furthermore, a locked, bricked or otherwise misbehaving device may in the worst case cause a need of sending service staff to the residence of the user, which is very expensive.

Therefore, it would be desired to overcome a large portion of the need for hands-on configuration and management of the gateway functions in a home LAN.

An object of the present invention is to improve the user friendliness and transparency of a home LAN.

According to a first aspect the object of the present invention is achieved by an access interface for a user home LAN which has associated processing means adapted to provide a virtual network by assigning an IP address to each user device in the home LAN and which has associated external operator managed service entities enabling the user device and external network and/or service to communicate by means of the virtual network.

According to a second aspect the object is achieved by a virtual network for a user home LAN comprising an access interface which has associated processing means adapted to provide an IP address to each user device in the home LAN. Further, the comprised access interface has associated external operator managed service entities enabling the user device and external network and/or service to communicate by means of the virtual network.

According to a third aspect the object is achieved by a method for enabling communication to and from a user home LAN. The method comprises the steps of defining a virtual network by means of an access interface having associated processing means adapted to provide an IP address to each user device in the home LAN and providing, by means of the access interface, an associated external operator managed service entity enabling the user device and external network and/or service to communicate by means of the virtual network.

According to an embodiment of the present invention the IP addresses of the user devices are distributed by the DHCP server entity in the access interface.

According to a further embodiment of the present invention the hop router entity allocates a whole IP subnet to the home LAN.

The present invention provides opportunity for a network operator to offer easily accessible services such as hosted content server services. A further advantage of the present invention is that no NAT/FW is needed at the residential side of the network. Some need for gateway functions is removed while other functions, i.e. a service gateway entity, are moved to the outside of the network, i.e. the operator network. The hands-on configuration made by the user is minimized, avoiding configuration of gateways and NAT/FWs on the premises of the user. If the user needs to configure the NAT/FW it is done through a web portal entity, which is much easier for the average user. The present invention enables a truly "plug-an-play" system for the user. It is a considerable advantage for the operator to be able to control and update the configuration of the network and to offer the NAT/FW function and additional services as operator hosted services. Additionally, a higher level of transparency is provided by e.g. a mobile Point of Presence entity and AAA server entity, since both mobile devices and network servers are provided with IP level connectivity with user devices within the home LAN. Thus, the need of interworking functions is decreased.

Additionally, as the NAT/FW function, i.e. a NAT/FW entity, in the virtual network is removed from the users premises to the operators network the operator can operate with a more limited amount of global IP addresses.

### BRIEF DESCRIPTION OF THE DRAWINGS

The invention will in the following be described in more detail with reference to enclosed drawings, wherein:
- Fig. 1: shows a home LAN connected to a WAN;
- Fig. 2: illustrates a virtual home network, managed by an operator, comprising a home LAN;
- Fig. 3: shows a home LAN connected through a bridged RG to an access interface comprising operator managed service entities;
- Fig. 4: shows a home LAN connected through a routed RG to an access interface comprising operator managed service entities; and
- Fig. 5: is a flowchart of the method according to the present invention.

### DETAILED DESCRIPTION OF THE INVENTION

In the following description, for purposes of explanation and not limitation, specific details are set forth, such as particular sequences of steps, signalling protocols and device configurations in order to provide a thorough understanding of the present invention. It will be apparent to one skilled in the art that the present invention may be practised in other embodiments that depart from these specific details.

Moreover, those skilled in the art will appreciate that the functions explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as a system comprising a computer processor and a memory coupled to the processor, wherein the memory is encoded with one or more programs that may perform the functions disclosed herein.

The present invention relates to an access interface for a user home LAN. The access interface provides access to an operator managed home area network service. The access interface comprises associated processing means adapted to provide an IP address within the same domain space to each user device in a home LAN. Thus, a virtual network per home LAN, separating traffic belonging to different LANs is implemented. The virtual network is hosted and managed by the operator. The access interface also comprises service entities which are hosted and managed by the operator and/or an associate of the operator. The entities, which are managed and hosted by an operator, are adapted to enable the user devices in the home LAN to communicate with each other or external network. The service entities could be grouped into a single node implementation or a multi-node implementation. The access interface is virtualized, i.e. it is visible and/or active in the virtual network of a user.

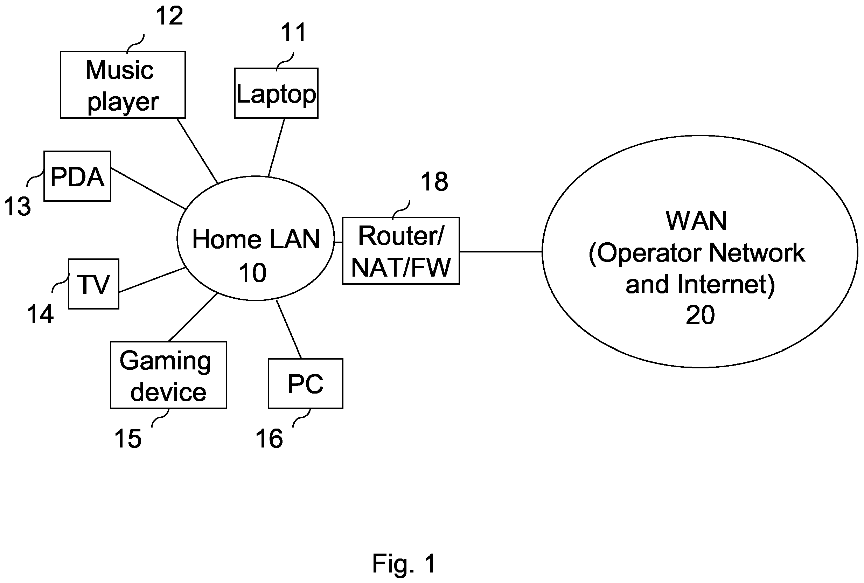

Figure 1 illustrates a typical prior art network wherein the present invention may be implemented. As illustrated, a group of computers and associated devices 11-16, e.g. gaming devices, Personal Digital Assistants (PDAs), music and media players, media recorders, television sets, set top boxes, share a common communications line or wireless link and typically share the resources of a single processor or server within a small geographic area (for example, within a residential home). Usually, the server has applications and data storage that are shared in common by multiple computer users. The local area network may serve as few as one or two users (for example, in a home network). Typically, the home LAN 10 is a private IP network, wherein the devices get their IP addresses from a home router 18. The user devices interwork smoothly with a networking protocol, e.g. the SMB, UPnP or DLNA, with a minimum of configuration needed from the end users.

The Universal Plug and Play (UPnP) standard uses Internet and Web protocols to enable devices such as PCs, peripherals, intelligent appliances, and wireless devices to be plugged into a network and automatically know about each other. With UPnP, when a user plugs a device into the network, the device will configure itself, acquire a TCP/IP address, and use a discovery protocol based on the Internet's Hypertext Transfer Protocol (HTTP) to announce its presence on the network to other devices. For instance, if a user has a camera and a printer connected to the network and needs to print out a photograph, he/she could press a button on the camera and have the camera send a discover request asking if there are any printers on the network. The printer identifies itself and sends its location in the form of a universal resource locator (URL) to the camera.

Moreover, the connection to a wide area network (WAN) 20 is commonly shared among the user devices in a home LAN, and a NAT/FW (Network Address Translator/Firewall) 18 located in the home LAN is often used when interconnecting with the WAN. In other words, no direct connection to the user devices home LAN is available without going through the NAT/FW.

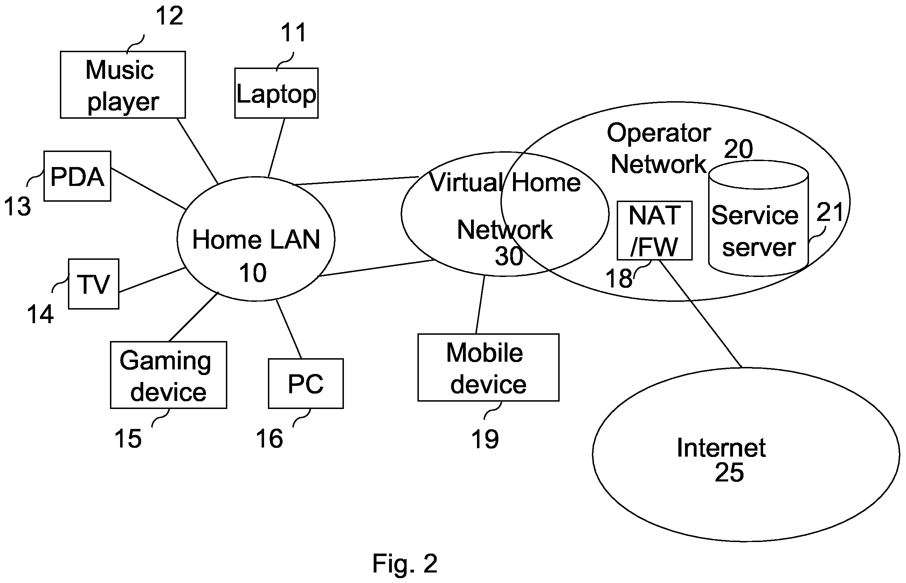

In an embodiment of the present invention, shown in figure 2, a virtual home network 30 is created by using VPN (Virtual Private Network) technique. The VPN technique is used to create virtual network spaces logically isolated from each other. The home LAN 10, as shown in figure 2, operates in an IP domain space provided by the network operator. Moreover, when the home LAN 10 wants to interconnect with a network outside the virtual home network 30, e.g. the Internet 25, a NAT/FW 18 located in the operator network 20 is used for the communication. Consequently, all configuration of the NAT/FW 18 will be done through the operator, e.g. through an operator provided portal.

Accordingly, operator services 21 as well as mobile devices 19 are assigned IP addresses that belong to the same domain as the home LAN 10, i.e.they become part of the virtual home network. Hence, mobile devices 19 and operator services 21 can communicate directly with user devices 11-16 in the home LAN using e.g. UPnP and DLNA protocols, without the need of gateways at the premises of the user.

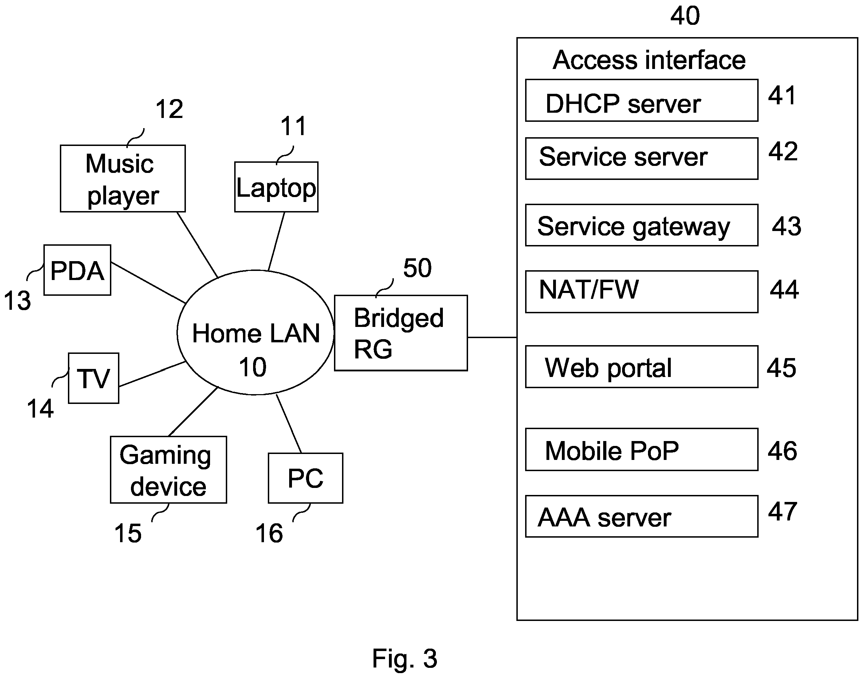

Further, in an embodiment of the present invention, shown in figure 3, the home LAN 10 connects to an access interface 40 in an operator network through a bridged residential gateway (RG) 50 located in the home LAN 10. The bridged RG 50 could preferably be an Ethernet switch in combination with an access modem. The access interface 40 of the operator network comprises a DHCP (Dynamic Host Configuration Protocol) server entity 41 managed by the operator, providing IP addresses to the user devices in the home LAN 10. The DHCP server entity 41 provides IP addresses within the same domain space to each user device 11-16 in the home LAN 10. In other words, each home LAN 10 with the user devices connected to it is mapped to a separate layer 2 Virtual Private Network (VPN), e.g. implemented by a virtual LAN (VLAN) technique. The operator network could handle a large number of VPNs, e.g. with the IEEE Q-in-Q protocol, keeping traffic in different customer VPNs segregated. Furthermore, services 42 provided by the operator, e.g. a content server service 21 or a game server, may also be accessible to the LAN by being assigned IP addresses in the same domain space, i.e. the services are part of the VPN and visible in the home LAN. Hence, the access interface has enabled implementation of an operator managed VPN per user or residence, wherein the VPN comprises user devices and services provided by the operator network system. It should be noted that local switching in the home LAN is still possible.

Consequently, when the bridged RG 50 connects to the operator it is statically mapped by the access interface 40 into the right VPN. Moreover, when a user device, e.g. a PDA 13, connects to the home LAN 10 it will request an IP address by sending a DHCP request. The request will be relayed through the RG 50 to the DHCP server entity 41 of the access interface 40. The DHCP server entity 41 will respond with a lease of an IP address within the range used for the specific VPN. Additionally, proper default gateway and other routing information are provided to the user device, i.e. the PDA 13.

As mentioned, the operator could provide different services to a user /subscriber who subscribe to the virtual home network service. For example, the operator could offer hosted content server services providing storage capabilities for users file archive. The content server could be located in the operator network and part of the users VPN and thereby being transparently accessible from the user device. When a user device, e.g. a music player 12, in the home LAN 10 wants to communicate with the operator hosted content server, e.g. to access the file archive of the user, IP multicast packets are sent from the user device to the bridged RG 50 if the IP address of the content server is not known. The RG 50 distributes the packets further through the VPN. The service entity 42, e.g. the content server service, in the access interface 40 responds to the request and discovery, e.g. of the UPnP protocol, could be handled. If the destination of the information, that is the IP address, is known a normal IP packet, instead of a multicast packet, is sent, i.e. switched, from the user device in the VPN to the service. Obviously, returning packets would be handled in the same way.

It should be noted that the service could be operated by another service provider than the network operator and located in another network than the operator network and still be part of the VPN.

Moreover, when a user device, e.g. a gaming device 15, in the home LAN 10 wants to communicate with a service server outside the VPN, e.g. for playing games online, IP multicast packets are sent from the user device to the bridged RG 50 if the IP address is not known. The RG 50 distributes the packets further through the VPN. An operator managed service gateway entity 43 in the access interface responds to the request and discovery, e.g. of the UPnP protocol, could be handled. If the destination of the information, that is the IP address, is known a normal IP packet, instead of a multicast packet, is sent from the user device in the VPN to the service gateway entity 43. Further, the service gateway entity 43 relays the information. For example, the service gateway entity 43 could be a Session Border Controller (or Session Border Gateway) for IP-Multimedia Subsystem (IMS).

Furthermore, when a user device, e.g. a PC 16, in the home LAN 10 sends IP packets destined to the Internet 25 they are relayed through the bridged RG 50. The RG 50 distributes the packets further through the VPN. The default route for Internet traffic will be the NAT (Network Address Translation or Network Address Translator) entity 44 in the access interface. The operator managed NAT entity 44 translates an IP address used within an inside network, i.e. the VPN, to a different IP address known within an outside network, i.e. the Internet 25. The operator hosted NAT 44 is adapted to enable a plurality of user devices to share a single public IP address visible on the Internet. Typically, a NAT maps the local inside network addresses to one or more global outside IP addresses and unmaps the global IP addresses on incoming packets back into local IP addresses of the VPN. The incoming packets are switched to the right VPN preferably by using a VPN tag. A VPN tag identifies the VPN and is unique for the specific VPN. This helps ensure security since each outgoing or incoming request must go through the translation process that also offers the opportunity to qualify or authenticate the request or match it to a previous request. It should be noted that the VPN tag provides the operator to operate with a more limited amount of global IP addresses. For example may a plurality of separate VPNs use the same IP addresses as the VPN tag provides the opportunity to differentiate between the separate networks. The NAT entity 44 could be included as part of a router and could be part of a firewall (FW). The NAT/FW 44 applies suitable firewall rules on the traffic. Obviously, the NAT/FW entity 44 could include PAT (Port Address Translation) functionality using TCP/UDP ports in addition to IP addresses to map many private network addresses to a single outside address.

Additionally, the operator could provide a web portal entity 45 for controlling the NAT/FW function. Then a user could configure his operator hosted NAT/FW 44 and configure for example port forwarding and port triggering as he or she needs to.

When a mobile device connects to the network it sends an activation signal to an access network. For example, if the mobile device is a GPRS (General Packet Radio Services) cellular phone it sends an activation signal containing APN (Access Point Name) providing routing information for SGSN (Serving GPRS Support Nodes) and GGSN (Gateway GPRS Support Nodes) to the access network. Additional information regarding the specific VPN of the mobile device could be included in the APN. Then, the access network of the mobile device connects to a mobile PoP (Point of Presence) entity 46 in the access interface. The information regarding the users VPN is for example derived from the APN. The mobile PoP assigns the mobile device an IP address within the users VPN, i.e. within the domain space used by his/her home LAN. The mobile PoP 46 is a tunnel termination point connecting the mobile device to other networks. If the activation signal of the mobile device doesn't include information about routing to the mobile PoP 46 it could be derived from a AAA server entity 47 in the access interface. The AAA server entity 47 contains information about subscriptions of a user of the virtual home network service.

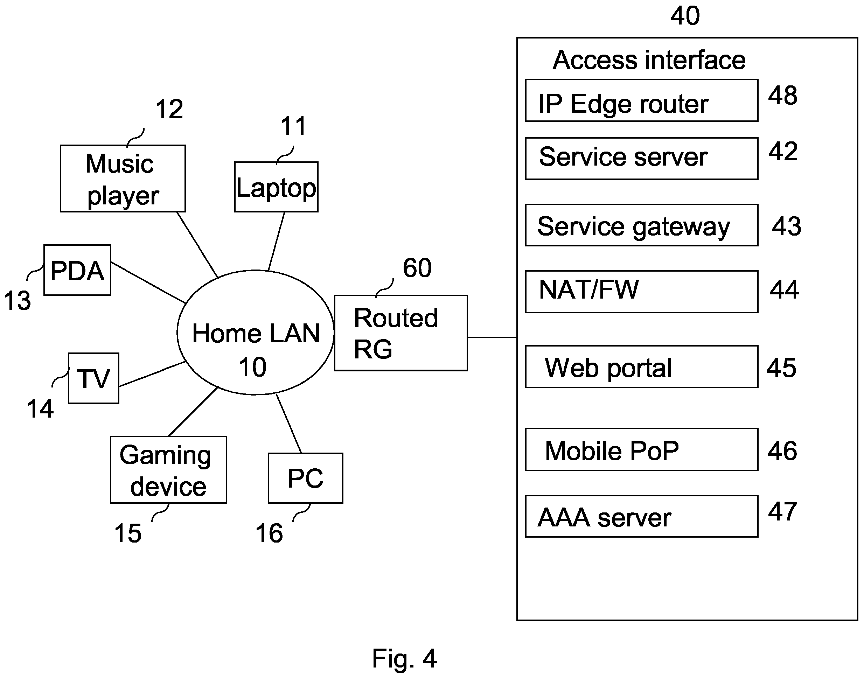

In another embodiment of the present invention, as depicted in figure 4, the residential gateway 60 is a routed gateway. A routed residential gateway is an embodiment of the present invention implementing a solution on the network layer, i.e. layer 3, of the commonly-referenced multilayer communication model, Open Systems Interconnection (OSI). The bridged RG mentioned above is an embodiment of the present invention implementing a solution on the Data Link layer, i.e. layer 2, of OSI.

In this embodiment the residential RG 60 is a router, which routes IP packets to and from the home LAN 10 on the contrary of the bridged RG 50, which switches packets. Further, the home LAN 10 connects to the access interface 40 of an operator network through the routed RG 60 located in the home LAN 10. The routed RG 60 could preferably be a router in combination with an access modem. The access interface 40 of the operator network comprises an IP Edge router entity 48, i.e. a hop router managed by the operator, providing IP addresses to the user devices 11-16 in the home LAN 10. The IP Edge router entity 48 allocates a whole IP subnet to the home LAN 10 creating a VPN for each home LAN subscribing to the virtual home network service. Furthermore, a service 42 provided by the operator, e.g. content servers, may also be accessible to the home LAN 10 by being assigned IP addresses in the same domain space, i.e. the service is part of the VPN. Hence, the access interface has enabled implementation of an operator managed VPN per user or residence; wherein the VPN comprises user devices and services provided by the operator network system.

Consequently, when the routed RG 60 connects to the operator it is statically mapped by the access interface 40 into the right VPN. Moreover, an IP Edge entity 48 in the access interface 40 provides a range of IP addresses to be used by the user devices 11-16 of the home LAN 10.

Moreover, when a user device, e.g. a gaming device 15, connects to the home LAN 10 it will request an IP address by sending a DHCP request. The request will be answered by the RG 60 providing the device with an IP address within the specific VPN.

As mentioned, the operator could provide different services to a user who subscribe to the virtual home network service. For example, the operator could offer hosted content servers providing storage space for users file archive. The content servers could be located in the operator network and part of the users VPN and thereby being transparently accessible from the user device. When a user device, e.g. a music player 12, in the home LAN 10 wants to communicate with the operator hosted content server, e.g. to access the file archive of the user, IP multicast packets are sent from the user device to the routed RG 60 if the IP address of the content server is not known. The routed RG 60 is configured to forward multicast packets to the network side. Hence, the RG 60 distributes the packets further through the VPN. The service server entity 42, i.e. the content server, in the access interface 40 responds to the request informing the user device, i.e. the music player, of its IP address. If the destination of the information is known a normal IP packet, instead of a multicast packet, is sent from the user device in the VPN to the default gateway, i.e. the RG. The router function of the RG 60 determines that the packet in not destined for the local subnet and routes it to preferably the IP Edge router entity 48 of the access interface. Obviously, returning packets would be handled in the same way.

Moreover, when a user device, e.g. a gaming device 15, in the home LAN 10 wants to communicate with a service server outside the VPN, e.g. for playing games online, IP multicast packets are sent from the user device to the routed RG 60. The RG 60 distributes the packets further through the VPN. The operator managed service gateway entity 43 in the access interface responds to the request and relays the information to the service server. For example, the service gateway entity 43 could be a Session Border Controller (or Session Border Gateway) for IP-Multimedia Subsystem (IMS).

Furthermore, when a user device, e.g. a PC 16, in the home LAN 10 sends IP packets destined to the Internet 25 they are relayed through the routed RG 60. The RG 60 distributes the packets further through the VPN to the IP Edge router 48 entity in the access interface 40. The IP Edge router entity 48 routes Internet traffic to the NAT entity 44 in the access interface 40. The NAT 44 translates an IP address used within an inside network, i.e. the VPN, to a different IP address known within an outside network, i.e. the Internet 25. The operator hosted NAT 44 is adapted to enable a plurality of user devices to share a single public IP address visible on the Internet. Typically, a NAT maps the local inside network addresses to one or more global outside IP addresses and unmaps the global IP addresses on incoming packets back into local IP addresses of the VPN. The incoming packets are routed to the right VPN preferably by using a VPN tag. A VPN tag identifies the VPN and is unique for the specific VPN. This helps ensure security since each outgoing or incoming request must go through the translation process that also offers the opportunity to qualify or authenticate the request or match it to a previous request. It should be noted that the VPN tag provides the operator to operate with a more limited amount of global IP addresses. For example may a plurality of separate VPNs use the same IP addresses as the VPN tag provides the opportunity to differentiate between the separate networks. The NAT entity 44 could be included as part of a router and could be part of a firewall (FW). The NAT/FW 44 applies suitable firewall rules on the traffic. Obviously, the NAT/FW entity 44 could include PAT (Port Address Translation) functionality using TCP/UDP ports in addition to IP addresses to map many private network addresses to a single outside address.

Additionally, as in above described embodiment, shown in figure 3, the operator could provide a web portal entity 45 for controlling the NAT/FW function. Then a user could configure his operator hosted NAT/FW and configure for example port forwarding and port triggering as he or she needs to.

When a mobile device connects to the network it sends an activation signal to an access network. For example, if the mobile device is a GPRS (General Packet Radio Services) cellular phone it sends an activation signal containing APN (Access Point Name) providing routing information for SGSN (Serving GPRS Support Nodes) and GGSN (Gateway GPRS Support Nodes) to the access network. Additional information regarding the specific VPN of the mobile device could be included in the APN. Then, the access network of the mobile device connects to a mobile PoP (Point of Presence) entity 46 in the access interface. The information regarding the users VPN is for example derived from the APN. The mobile PoP assigns the mobile device an IP address within the users VPN, i.e. within the domain space used by his/her home LAN. The mobile PoP 46 is a tunnel termination point connecting the mobile device to other networks. If the activation signal of the mobile device doesn't include information about routing to the mobile PoP 46 it could be derived from a AAA server entity 47 in the access interface. The AAA server entity 47 contains information about subscriptions of a user to the virtual home network service.

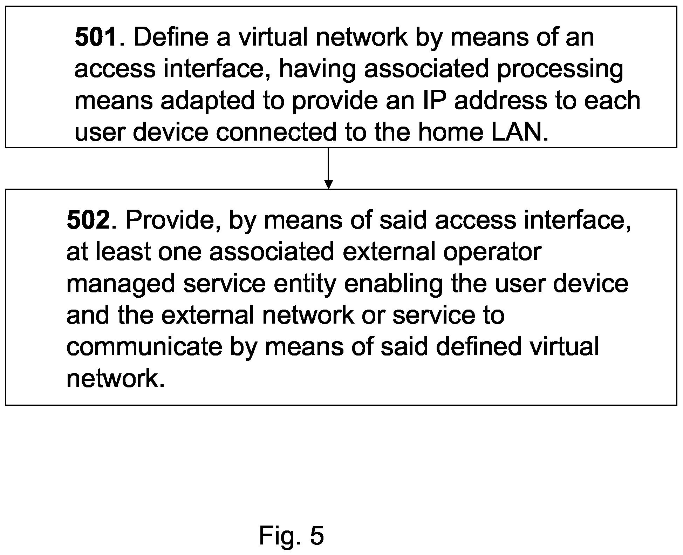

The present invention relates to a method for enabling communication to and from a user home LAN comprising one or more user devices wherein at least one device is able to communicate, via the home LAN, with at least one external network or service. The method according to the present invention is illustrated by the flowchart of figure 5 and comprises the steps of:
501. Define a virtual network by means of an access interface 40, having associated processing means adapted to provide an IP address to each user device 11-16, 50, 60 connected to the home LAN 10.
502. Provide, by means of said access interface 40, at least one associated external operator managed service entity 41-48 enabling the user device and the external network 20, 25 or service to communicate by means of said defined virtual network.

The access interface could preferably be implemented in the operator network. It could preferably be activated, configured and maintained by the operator when a user orders a subscription for the operator managed home area network service.

While the present invention has been described with respect to particular embodiments (including certain device arrangements and certain orders of steps within various methods), those skilled in the art will recognize that the present invention is not limited to the specific embodiments described and illustrated herein. Therefore, it is to be understood that this disclosure is only illustrative. Accordingly, it is intended that the invention is to be limited only by the scope of the claims appended hereto.

## Claims

1. An access interface (40) for a user home LAN (10) comprising one or more user devices wherein at least one user device is able to via the home LAN (10) communicate with at least one external network (20, 25) or service, **characterized in that** the access interface (40)
comprising processing means adapted to provide, managed by an external operator, an IP address within the same domain space to each user device of the user devices (11-16, 50, 60) connected to the home LAN (10), thereby defining a virtual network comprising said at least one user device (11-16, 50, 60) connected to the home LAN (10) and separating traffic per home LAN belonging to different LANs,
the access interface further comprising at least one said external operator managed service entity (41, 48) adapted to enable the user device and the external network (20, 25) or service to communicate by means of said defined virtual network.

2. The access interface according to claim 1, **characterized in that** the virtual network allows internal communication between all or a number of user devices (11-16).

3. The access interface according to claim 1 or 2, **characterized in that** one of the entities is an operator hosted NAT/FW (44) adapted to enable a plurality of user devices to share a single public IP address visible on the Internet.

4. The access interface according to claim 1, 2 or 3, **characterized in that** one of the entities is an operator hosted NAT/FW (44) adapted to enable a plurality of virtual networks to share a single public IP address visible on the Internet.

5. The access interface according to claim 3 or 4, **characterized in that** one of the entities is a web portal (45) adapted to control said NAT/FW.

6. The access interface according to any of claims 1-5, **characterized in that** one of the entities is a mobile Point of Presence (46) adapted to assign an IP address to a mobile device (19) within said virtual network.

7. The access interface according to any of claims 1-6, **characterized in that** one of the user devices is a bridged residential gateway (50).

8. The access interface according to any of claims 1-7, **characterized in that** one of the user devices is a routed residential gateway (60).

9. A virtual network for a user home LAN (10) comprising one or more user devices (11-16, 50, 60) wherein at least one user device is able to via the home LAN (10) communicate with at least one external network (20, 25) or service, **characterized in that** the virtual network comprises an access interface (40), the access interface (40)
comprising processing means adapted to provide, managed by an external operator, an IP address within the same domain space to each user device of the user devices (11-16, 50, 60) connected to the home LAN (10), thereby defining the virtual network comprising said at least one user device (11-15, 50, 60) connected to the home LAN (10) and separating traffic per home LAN belonging to different LANs,
the access interface further comprising at least one said external operator managed service entity (41, 48) adapted to enable the user device and external network (20, 25) or service to communicate by means of said defined virtual network.

10. A method for enabling communication to and from a user home LAN (10) comprising one or more user devices (11-16, 50, 60) wherein at least one user device is able to via the home LAN (10) communicate with at least one external network (20, 25) or service, **characterized in that** by the step of:
defining a virtual network by means of an access interface (40) comprising processing means providing, managed by an external operator, an IP address within the same domain space to each user device of the user devices (11-16, 50, 60) connected to the home LAN (10), thereby defining the virtual network comprising said at least one user device (11-16, 50, 60) connected to the home LAN and separating traffic per home LAN belonging to different LANs;
providing, by means of said access interface (40), at least one said external operator managed service entity (41-48) enabling the user device and the external network (20, 25) or service to communicate by means of said defined virtual network.

11. The method according to claim 10, **characterized in that** by the step of enabling internal communication between all or a number of user devices (11-16, 50, 60) in said virtual network by means of appropriate protocol or signalling means.

12. The method according to claim 10 or 11, **characterized in that** one of the entities is an operator hosted NAT/FW (44) adapted to enable a plurality of user devices to share a single public IP address visible on the Internet.

13. The method according to claim 10-12, **characterized in that** one of the entities is an operator hosted NAT/FW (44) adapted to enable a plurality of virtual networks to share a single public IP address visible on the Internet.

14. The method according to claim 12 or 13, **characterized in that** one of the entities is a web portal adapted to control said NAT/FW (44).

15. The method according to any of claims 10-14, **characterized in that** one of the entities is a mobile Point of Presence (46) adapted to assign an IP address to a mobile device (19) within said virtual network.

16. The method according to any of claims 10-15, **characterized in that** one of the user devices is a bridged residential gateway (50).

17. The method according to any of claims 10-16, **characterized in that** one of the user devices is a routed residential gateway (60).

## Patentansprüche

1. Zugangsschnittstelle (40) für ein Benutzer-Heim-LAN (10), umfassend eine oder mehrere Benutzervorrichtungen, wobei mindestens eine Benutzervorrichtung über das Heim-LAN (10) mit mindestens einem externen Netzwerk (20, 25) oder Dienst kommunizieren kann, **dadurch gekennzeichnet, dass** die Zugangsschnittstelle (40) ein Verarbeitungsmittel umfasst, das von einem externen Betreiber verwaltet wird und angepasst ist, um jeder Benutzervorrichtung der Benutzervorrichtungen (11-16, 50, 60), die mit dem Heim-LAN (10) verbunden sind, eine IP-Adresse innerhalb desselben Domänenraums bereitzustellen, wodurch ein virtuelles Netzwerk definiert wird, umfassend die mindestens eine Benutzervorrichtung (11-16, 50, 60), die mit dem Heim-LAN (10) verbunden ist und den Verkehr pro Heim-LAN, das zu unterschiedlichen LANs gehört, trennt,
wobei die Zugangsschnittstelle ferner mindestens eine von dem externen Betreiber verwaltete Diensteinheit (41, 48) umfasst, die angepasst ist, um es der Benutzervorrichtung und dem externen Netzwerk (20, 25) oder Dienst zu ermöglichen, mittels des definierten virtuellen Netzwerks zu kommunizieren.

2. Zugangsschnittstelle nach Anspruch 1, **dadurch gekennzeichnet, dass** das virtuelle Netzwerk die interne Kommunikation zwischen allen oder einer Anzahl von Benutzervorrichtungen (11-16) zulässt.

3. Zugangsschnittstelle nach Anspruch 1 oder 2, **dadurch gekennzeichnet, dass** eine der Einheiten eine von einem Betreiber gehostete NAT/FW (44) ist, die angepasst ist, um einer Vielzahl von Benutzervorrichtungen eine gemeinsame Nutzung einer einzigen öffentlichen IP-Adresse zu ermöglichen, die im Internet sichtbar ist.

4. Zugangsschnittstelle nach Anspruch 1, 2 oder 3, **dadurch gekennzeichnet, dass** eine der Einheiten eine von einem Betreiber gehostete NAT/FW (44) ist, die angepasst ist, um einer Vielzahl von virtuellen Netzwerken eine gemeinsame Nutzung einer einzigen öffentlichen IP-Adresse zu ermöglichen, die im Internet sichtbar ist.

5. Zugangsschnittstelle nach Anspruch 3 oder 4, **dadurch gekennzeichnet, dass** eine der Einheiten ein Webportal (45) ist, das zur Steuerung des NAT/FW angepasst ist.

6. Zugangsschnittstelle nach einem der Ansprüche 1-5, **dadurch gekennzeichnet, dass** eine der Einheiten ein Point of Presence (46) ist, der angepasst ist, um einer mobilen Vorrichtung (19) innerhalb des virtuellen Netzwerks eine IP-Adresse zuzuweisen.

7. Zugangsschnittstelle nach einem der Ansprüche 1-6, **dadurch gekennzeichnet, dass** eine der Benutzervorrichtungen ein überbrücktes Privat-Gateway (50) ist.

8. Zugangsschnittstelle nach einem der Ansprüche 1-7, **dadurch gekennzeichnet, dass** eine der Benutzervorrichtungen ein geroutetes Privat-Gateway (60) ist.

9. Virtuelles Netzwerk für ein Benutzer-Heim-LAN (10), umfassend eine oder mehrere Benutzervorrichtungen (11-16, 50, 60), wobei mindestens eine Benutzervorrichtung über das Heim-LAN (10) mit mindestens einem externen Netzwerk (20, 25) oder Dienst kommunizieren kann, **dadurch gekennzeichnet, dass** das virtuelle Netzwerk eine Zugangsschnittstelle (40) umfasst, wobei die Zugangsschnittstelle (40)
ein Verarbeitungsmittel umfasst, das von einem externen Betreiber verwaltet wird und angepasst ist, um jeder Benutzervorrichtung der Benutzervorrichtungen (11-16, 50, 60), die mit dem Heim-LAN (10) verbunden sind, eine IP-Adresse innerhalb desselben Domänenraums bereitzustellen, wodurch ein virtuelles Netzwerk definiert wird, umfassend die mindestens eine Benutzervorrichtung (11-15, 50, 60), die mit dem Heim-LAN (10) verbunden ist und den Verkehr pro Heim-LAN, das zu unterschiedlichen LANs gehört, trennt,
wobei die Zugangsschnittstelle ferner mindestens eine von dem externen Betreiber verwaltete Diensteinheit (41, 48) umfasst, die angepasst ist, um es der Benutzervorrichtung und dem externen Netzwerk (20, 25) oder Dienst zu ermöglichen, mittels des definierten virtuellen Netzwerks zu kommunizieren.

10. Verfahren zum Ermöglichen der Kommunikation zu und von einem Benutzer-Heim-LAN (10), umfassend eine oder mehrere Benutzervorrichtungen (11-16, 50, 60), wobei mindestens eine Benutzervorrichtung über das Heim-LAN (10) mit mindestens einem externen Netzwerk (20, 25) oder Dienst kommunizieren kann, **gekennzeichnet durch** den Schritt:
Definieren eines virtuellen Netzwerks mittels einer Zugangsschnittstelle (40), die ein Verarbeitungsmittel umfasst, das von einem externen Betreiber verwaltet wird und angepasst ist, um jeder Benutzervorrichtung der Benutzervorrichtungen (11-16, 50, 60), die mit dem Heim-LAN (10) verbunden sind, eine IP-Adresse innerhalb desselben Domänenraums bereitzustellen, wodurch das virtuelle Netzwerk definiert wird, das die mindestens eine Benutzervorrichtung (11-16, 50, 60) umfasst, die mit dem Heim-LAN verbunden ist und den Verkehr pro Heim-LAN, das zu unterschiedlichen LANs gehört, trennt;
Bereitstellen, mittels der Zugangsschnittstelle (40), mindestens einer von dem externen Betreiber verwalteten Diensteinheit (41-48), die der Benutzervorrichtung und dem externen Netzwerk (20, 25) oder Dienst ermöglicht, mittels des definierten virtuellen Netzwerks zu kommunizieren.

11. Verfahren nach Anspruch 10, **gekennzeichnet durch** den Schritt des Ermöglichens interner Kommunikation zwischen allen oder einer Anzahl von Benutzervorrichtungen (11-16, 50, 60) in dem virtuellen Netzwerk mittels geeigneter Protokoll- oder Signalisierungsmittel.

12. Verfahren nach Anspruch 10 oder 11, **dadurch gekennzeichnet, dass** eine der Einheiten eine von einem Betreiber gehostete NAT/FW (44) ist, die angepasst ist, um einer Vielzahl von Benutzervorrichtungen eine gemeinsame Nutzung einer einzigen öffentlichen IP-Adresse zu ermöglichen, die im Internet sichtbar ist.

13. Verfahren nach einem der Ansprüche 10-12, **dadurch gekennzeichnet, dass** eine der Einheiten eine von einem Betreiber gehostete NAT/FW (44) ist, die angepasst ist, um einer Vielzahl von virtuellen Netzwerken eine gemeinsame Nutzung einer einzigen öffentlichen IP-Adresse zu ermöglichen, die im Internet sichtbar ist.

14. Verfahren nach Anspruch 12 oder 13, **dadurch gekennzeichnet, dass** eine der Einheiten ein Webportal ist, das zur Steuerung des NAT/FW (44) angepasst ist.

15. Verfahren nach einem der Ansprüche 10-14, **dadurch gekennzeichnet, dass** eine der Einheiten ein Point of Presence (46) ist, der angepasst ist, um einer mobilen Vorrichtung (19) innerhalb des virtuellen Netzwerks eine IP-Adresse zuzuweisen.

16. Verfahren nach einem der Ansprüche 10-15, **dadurch gekennzeichnet, dass** eine der Benutzervorrichtungen ein überbrücktes Privat-Gateway (50) ist.

17. Verfahren nach einem der Ansprüche 10-16, **dadurch gekennzeichnet, dass** eine der Benutzervorrichtungen ein geroutetes Privat-Gateway (60) ist.

## Revendications

1. Interface d'accès (40) pour un LAN domestique d'utilisateur (10) comprenant un ou plusieurs dispositifs utilisateur dans laquelle au moins un dispositif utilisateur est capable via le LAN domestique (10) de communiquer avec au moins un réseau (20, 25) ou service externe, **caractérisée en ce que** l'interface d'accès (40)
comprend un moyen de traitement conçu pour fournir, gérée par un opérateur externe, une adresse IP au sein du même espace de domaine à chaque dispositif utilisateur des dispositifs utilisateur (11-16, 50, 60) connectés au LAN domestique (10), ce qui définit un réseau virtuel comprenant ledit au moins un dispositif utilisateur (11-16, 50, 60) connecté au LAN domestique (10) et séparant le trafic par LAN domestique appartenant à des LAN différents,
l'interface d'accès comprenant en outre au moins une entité de service (41, 48) gérée par ledit opérateur externe conçue pour permettre au dispositif utilisateur et au réseau (20, 25) ou service externe de communiquer au moyen dudit réseau virtuel défini.

2. Interface d'accès selon la revendication 1, **caractérisée en ce que** le réseau virtuel permet une communication interne entre la totalité ou un certain nombre de dispositifs utilisateur (11-16).

3. Interface d'accès selon la revendication 1 ou 2, **caractérisée en ce que** l'une des entités est un NAT/FW (44) hébergé par un opérateur conçu pour permettre à une pluralité de dispositifs utilisateur de partager une adresse IP publique unique visible sur Internet.

4. Interface d'accès selon la revendication 1, 2 ou 3, **caractérisée en ce que** l'une des entités est un NAT/FW (44) hébergé par un opérateur conçu pour permettre à une pluralité de réseaux virtuels de partager une adresse IP publique unique visible sur Internet.

5. Interface d'accès selon la revendication 3 ou 4, **caractérisée en ce que** l'une des entités est un portail Internet (45) conçu pour commander ledit NAT/FW.

6. Interface d'accès selon l'une quelconque des revendications 1 à 5, **caractérisée en ce que** l'une des entités est un point de présence mobile (46) conçu pour attribuer une adresse IP à un dispositif mobile (19) au sein dudit réseau virtuel.

7. Interface d'accès selon l'une quelconque des revendications 1 à 6, **caractérisée en ce que** l'un des dispositifs utilisateur est une passerelle résidentielle pontée (50).

8. Interface d'accès selon l'une quelconque des revendications 1 à 7, **caractérisée en ce que** l'un des dispositifs utilisateur est une passerelle résidentielle routée (60).

9. Réseau virtuel pour un LAN domestique d'utilisateur (10) comprenant un ou plusieurs dispositifs utilisateur (11-16, 50, 60) dans lequel au moins un dispositif utilisateur est capable via le LAN domestique (10) de communiquer avec au moins un réseau (20, 25) ou service externe, **caractérisé en ce que** le réseau virtuel comprend une interface d'accès (40), l'interface d'accès (40)
comprend un moyen de traitement conçu pour fournir, gérée par un opérateur externe, une adresse IP au sein du même espace de domaine à chaque dispositif utilisateur des dispositifs utilisateur (11-16, 50, 60) connectés au LAN domestique (10), ce qui définit le réseau virtuel comprenant ledit au moins un dispositif utilisateur (11-15, 50, 60) connecté au LAN domestique (10) et séparant le trafic par LAN domestique appartenant à des LAN différents,
l'interface d'accès comprenant en outre au moins une entité de service (41, 48) gérée par ledit opérateur externe conçue pour permettre au dispositif utilisateur et au réseau (20, 25) ou service externe de communiquer au moyen dudit réseau virtuel défini.

10. Procédé pour permettre une communication vers et depuis un LAN domestique d'utilisateur (10) comprenant un ou plusieurs dispositifs utilisateur (11-16, 50, 60) dans lequel au moins un dispositif utilisateur est capable via le LAN domestique (10) de communiquer avec au moins un réseau (20, 25) ou service externe, **caractérisé par** l'étape consistant à :
définir un réseau virtuel au moyen d'une interface d'accès (40) comprenant un moyen de traitement fournissant, gérée par un opérateur externe, une adresse IP au sein du même espace de domaine à chaque dispositif utilisateur des dispositifs utilisateur (11-16, 50, 60) connectés au LAN domestique (10), ce qui définit le réseau virtuel comprenant ledit au moins un dispositif utilisateur (11-16, 50, 60) connecté au LAN domestique et séparant le trafic par LAN domestique appartenant à des LAN différents ;
fournir, au moyen de ladite interface d'accès (40), au moins une entité de service (41 -48) gérée par ledit opérateur externe permettant au dispositif utilisateur et au réseau (20, 25) ou service externe de communiquer au moyen dudit réseau virtuel défini.

11. Procédé selon la revendication 10, **caractérisé par** l'étape consistant à permettre une communication interne entre la totalité ou un certain nombre de dispositifs utilisateur (11-16, 50, 60) dans ledit réseau virtuel au moyen d'un protocole ou moyen de signalisation approprié.

12. Procédé selon la revendication 10 ou 11, **caractérisé en ce que** l'une des entités est un NAT/FW (44) hébergé par un opérateur conçu pour permettre à une pluralité de dispositifs utilisateur de partager une adresse IP publique unique visible sur Internet.

13. Procédé selon la revendication 10, ou 12, **caractérisé en ce que** l'une des entités est un NAT/FW (44) hébergé par un opérateur conçu pour permettre à une pluralité de réseaux virtuels de partager une adresse IP publique unique visible sur Internet.

14. Procédé selon la revendication 12 ou 13, **caractérisé en ce que** l'une des entités est un portail Internet conçu pour commander ledit NAT/FW (44).

15. Procédé selon l'une quelconque des revendications 10 à 14, **caractérisé en ce que** l'une des entités est un point de présence mobile (46) conçu pour attribuer une adresse IP à un dispositif mobile (19) au sein dudit réseau virtuel.

16. Procédé selon l'une quelconque des revendications 10 à 15, **caractérisé en ce que** l'un des dispositifs utilisateur est une passerelle résidentielle pontée (50).

17. Procédé selon l'une quelconque des revendications 10 à 16, **caractérisé en ce que** l'un des dispositifs utilisateur est une passerelle résidentielle routée (60).
